# EUROPEAN PATENT SPECIFICATION

(11) **EP 0 919 404 B1**
(45) Date of publication and mention of the grant of the patent: **17.03.2004**
(21) Application number: 98850179.7
(22) Date of filing: 27.11.1998
(51) Int. Cl.: B60B 33/04

(54) **Arrangement at truck support wheels**
Radaufhängungseinrichtung eines Hubwagens
Installation de support de roues pour chariot élévateur

(30) Priority: 28.11.1997 SE 9704384
(43) Date of publication of application: 02.06.1999
(73) Proprietor: BT Industries Aktiebolag, S-59581 Mjölby (SE)
(72) Inventor: Isaksson, Lars, 595 51 Mjölby (SE)
(74) Representative: Berglund, Erik Wilhelm

(56) References cited:
- EP-A- 0 329 504
- EP-A- 0 670 256
- DE-A- 19 753 412
- DE-A- 19 807 849
- GB-A- 1 238 243

## Description

For trucks with a steerable driving wheel that is flanked by supporting wheels the contact force of the steerable driving wheel must be sufficiently large to secure sufficient driving, braking and steering forces. At the same time one also wish the support wheels to be in good force transmitting contact with the ground so that the truck moves smoothly and without wobbling even on an uneven surface. A known solution to this problem is to let the driving wheel be influenced downwards by a hydraulic cylinder, the hydraulic medium of which is subjected to the same pressure as that in the hydraulic cylinder lifting the load forks. In this way an automatic proportionality is achieved between the drive wheel pressure against the ground and the size of the load, securing that always sufficient driving, steering and in particular braking ability exist. A drawback at this device is however that it is difficult to find room for all the necessary parts, for instance when the drive unit is large, when also the movable vertical journaling of the drive unit in itself requires some space.

A truck according to the preamble of claim 1 is known from EP-A-0 670 256.

In view of the above problems the invention has as its object to provide a solution that also gives a satisfactory contact with the ground for the steerable driving wheel but that is easier to accommodate.

In accordance with the invention this object is solved by the support wheels of the truck being pressed by spring against the ground and that this spring force is counteracted by a force means, the exerted force of which is a function, for instance proportional, to the used lifting force of a load carrying means, for instance forks. The heavier load that the forks of the truck carry the larger force counteracts the spring force acting on the support wheel or support wheels so that the contact pressure of the driving wheel against the ground increases.

The inventive thought may be realized by a mechanical gearing between the "frame end" of a lifting cylinder and the support wheel suspension. The transferring device can be seen as a balance balancing support wheel force and lifting force.

Alternatively the force transfer can be hydraulic so that a piston influencing one or several support wheels is fed with the lifting pressure of the piston lifting the forks. The relation between the cross section areas of the pistons controls the degree of spring pressure counteraction, that is the contact pressure against the ground. The piston counteracting the spring force may either be pushing and work via levers or pulling and work directly on the support wheel. The pivot bearing of the support wheel may even be integrated in the lifting cylinder giving a compact arrangement.

If the truck has more than one support wheel, for instance one on each side of the driving wheel these may either be provided with individual means influencing the contact pressure of each support wheel individually or a common device or support wheel frame with connected support wheels. At connected support wheels the force that each support wheel can exert to counteract a tilting is double relative otherwise since at tilting one wheel uses the forces for both.

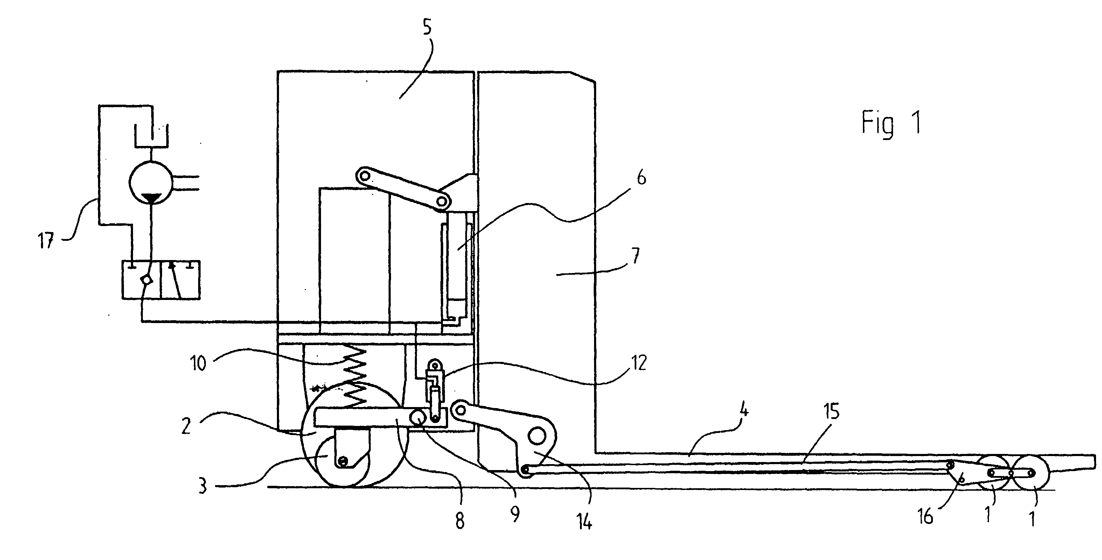

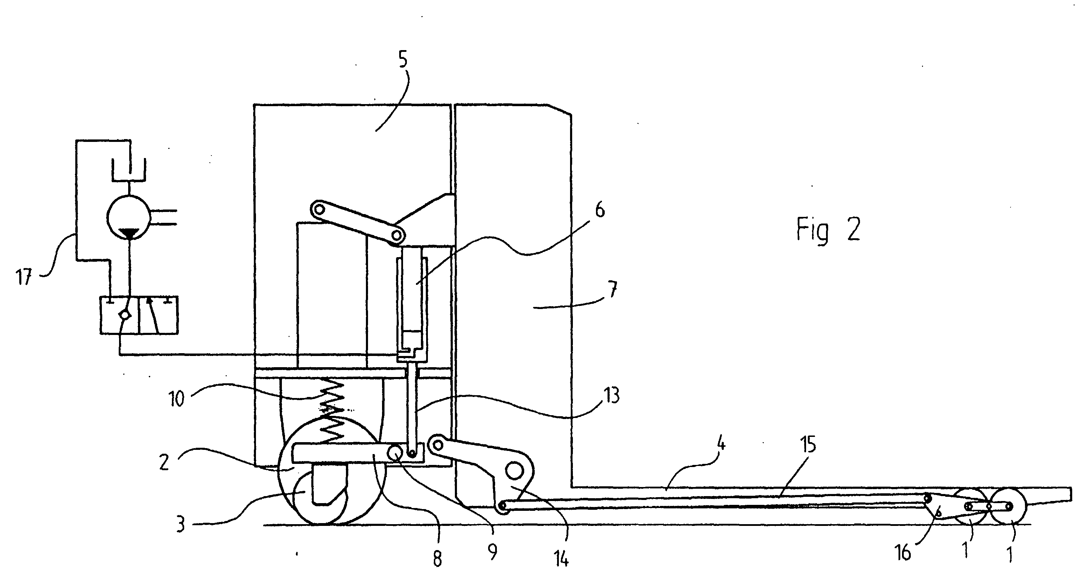

Additional advantages and developments of the inventive thought is apparent from the claims and the following description of embodiments shown in the drawings. In the drawings fig 1 shows a first embodiment of the invention and fig 2 a second embodiment.

The truck shown in fig 2 is supported in five points, in the front ends of the forks by rollers, centrally in the opposite end of the truck (drive part) by a steerable driving wheel 2, that can be steered by means of tiller arm, not shown. On each side of the steerable driving wheel 2 two support wheels 3 are arranged, why only one can be seen in the figures. When a load is to be lifted and transported this is done by the schematically shown hydraulic system 17 being activated feeding hydraulic pressurized oil to a lifting cylinder 6, the upwards extending piston rod of which being connected to a part 7 supporting the forks. By means of a mechanical link system 14 - 16 the displacement at lifting between the fork carrying part 7 and the drive part 5 of the truck is transmitted to the rollers 1 arranged in the front end of the forks 4 so that the forks 4 are lifted as high in relation to the rolls 1 as to the drive unit 5.

In a conventional truck of this kind the lower end of the lifting piston 6 would be fastened to the frame of the drive unit 5. At this version of the invention this is however not the case, but the "frame end" of the cylinder is instead via a pushrod 13 swing journaled in one end of a two-armed lever 8 that in turn is swing journaled around a transversely arranged axle 9 in the drive part 5 of the truck. In the other end of the two-armed lever 8 one of the support wheels is pivotably mounted.

The load on the forks (or lifting force) is transferred via the cylinder 6, the pushrod 13 and the lever 8 to the support wheel 3 and lifts or push, in proportion to the load on the forks, the support wheel 3 upwards against the influence of a spring 10 that press the support wheel 3 against the ground. As a result the contact pressure of the support wheel is reduced with increasing load, which in turn means that the contact pressure of the driving wheel increases as desired.

The lever devices 8 on each side of the driving wheel are connected to a common lever device or support wheel frame so that both support wheels are influenced by the same hydraulic piston or pistons. In this way a stabilizing effect is achieved for the supporting wheels.

Since the shown truck has a limited lifting height it is essential that the lifting piston can not be pressed against a mechanical upper stop since the resulting pressure then no longer corresponds to the load and an erroneous value for the support wheel pressure may result. It is also conceivable to arrange an overflow valve that opens before a mechanical stop is reached for the movement, securing that the hydraulic pressure corresponds to the lifted load. Alternatively one can consider the support wheel influencing piston being freed from the lifting circuit before this reaches a possible mechanical stop for the lifting movement. (The pressure may then be maintained with a small pressure reservoir.)

The device shown in fig 1 coincides in most aspects with the one shown in fig 2, but has instead of a direct connection between lifting piston and lever an hydraulic cylinder 12 at the front end of each lever 8, which cylinders 12 are fed with the pressure of the lifting cylinder. The function becomes essentially the same and in the same way as in fig 1 the two levers 8 may be connected in stabilizing purpose.

One may consider that in the lower end of the lifting cylinder a piston is integrated for influencing the support wheels, that is a cylinder with a piston for lifting in one end and one in the opposite end for influencing the lever device. The pistons may have the same diameter alternatively different diameters and may even extend into each other for guiding in the inner ends. In this case the cylinder sits firmly in the frame of the driving part.

In both the above shown cases the manoeuvring for the support wheels may be placed far from the driving wheel. Since the driving wheel further may be journaled directly in the the frame of the truck and does not need to be moveable, i.e. pretensionable in the height direction the need for coresponding movement journals is removed. At the same time a movement journal for the support wheels is required, but since the forces and dimensions for these are essentially less this is less costly and lighter.

If so desired the springs pretensioning the support wheels may be made adjustable to their force of pretension (spring force), which enables an adaption to different weights and working conditions for different trucks. Alternatively one can consider making the contact points of the hydraulic pistons on the levers adjustable to adjust the influence of the weight of the load on the contact pressure of the supporting wheels.

With the existence of levers for the contact of the support wheels with the ground not only the means that counteract the spring influencing the support wheel may be placed on principally freely chosen places, but this also goes for the spring.

Due to the existing force transfer between support wheels and forks there is a risk that vertial oscillation of the load is transformed into a pumping movement up and down for the support wheels, with the risk of decreased grip for the driving wheel or even that the system contribute to self oscillations for the truck. To counteract this in the case of a separate piston a restriction may be arranged in the hydraulic connection so that possible tendencies to oscillate is damped. Possibly one can consider that this restriction is effective only when no lifting movement takes place, this not to prevent a rapid adjustment at lifting, that otherwise might result in the truck beginning to move before the support wheel pressure has been reduced. The restriction may be complete, that is the connection between the pistons is closed as soon as lifting does not occur. At this it may be necessary to consider dynamic loads during the lifting moment that gives slightly larger hydraulic pressure than what is the case at equilibrium.

As is apparent from the above the invention gives a possibility to use load controlled contact pressure and with this improved drive and stability conditions even for smaller and more compact trucks than what has been possible before.

## Claims

1. A truck provided with at least one steerable driving wheel (2), at least one support wheel (3) situated close to the driving wheel (2), said support wheel (3) being pretensioned or pressed against the ground by a spring (10) and a load carrying means (4) that can be subjected to a lifting force, **characterized in that** a force means (12; 6, 13) is arranged to act on the support wheel (3) with a force that counteracts the spring (10), the force exerted by the force means (12; 6, 13) against the force of the spring (10) to its value being a function of the lifting force applied to the load carrying means (4).

2. A truck according to claim 1, **characterized in** the force means being constituted by a lifting cylinder (6) for the load carrying means (4), which cylinder (6) in one end is connected to the load carrying means (4) and that in the other end is connected to a mechanical force transmitting device, for instance a lever device (8), in particular with two arms, that also is connected to the support wheel (3).

3. A truck according to claim 1, **characterized in** the lifting force for the load carrying means (4) being provided by a lifting cylinder (6) connected at one end to the frame of the drive unit (5), and at the other end to said load carrying means (4) and that the force means is constituted by a hydraulic cylinder (12) connected at one end to the frame of the drive unit (5), and at the other end to a mechanical force transmitting device, for instance a lever device (8), that is connected to the support wheel (3) so that the pressure areas of respective cylinders (6, 12) determines the relation between load lifting force and a spring counteracting force.

4. A truck according to claim 3, **characterized in** the arranging of a restriction or a cut off valve being arranged between lifting cylinder (6) and the force means constituting a hydraulic cylinder (12), preferably only to be activated when driving, that is when no lifting movement takes place, in order to counteract oscillations between support (3) wheel and load.

5. A truck according to any of the preceding claims, **characterized in** the spring (10) being adjustable to its pretension.

6. A truck according to any of the preceding claims, **characterized in that** support wheels (3) one on each side of the driving wheel (2) are connected, or united on a support wheel frame, for common movement so that a balancing effect is achieved.

## Patentansprüche

1. Transportwagen, der versehen ist mit wenigstens einem lenkbaren Antriebsrad (2), wenigstens einem Stützrad (3), das nahe dem Antriebsrad (2) angeordnet ist, wobei das Stützrad (3) durch eine Feder (10) gegenüber dem Boden vorgespannt oder gedrückt wird, und einer Lasttrageeinrichtung (4), die einer Hubkraft unterzogen werden kann, **dadurch gekennzeichnet, dass** eine Krafteinrichtung (12; 6, 13) eingerichtet ist, um auf das Stützrad (3) mit einer Kraft zu wirken, die der Feder (10) entgegenwirkt, wobei die Kraft, die durch die Krafteinrichtung (12; 6, 13) gegenüber der Kraft der Feder (10) ausgeübt wird, bezüglich ihres Werts eine Funktion der Hubkraft ist, die auf die Lasttrageeinrichtung (4) ausgeübt wird.

2. Transportwagen nach Anspruch 1, **dadurch gekennzeichnet, dass** die Krafteinrichtung durch einen Hubzylinder (6) für die Lasttrageeinrichtung (4) gebildet ist, welcher Zylinder (6) an einem Ende an die Lasttrageeinrichtung (4) angeschlossen ist und dieser am anderen Ende an eine mechanische Kraftübertragungsvorrichtung, wie beispielsweise eine Hebelvorrichtung (8), insbesondere mit zwei Armen, angeschlossen ist, die auch mit dem Stützrad (3) verbunden ist.

3. Transportwagen nach Anspruch 1, **dadurch gekennzeichnet, dass** die Hubkraft für die Lasttrageeinrichtung (4) durch einen Hubzylinder (6) zur Verfügung gestellt wird, der an einem Ende mit dem Rahmen der Antriebseinheit (5) verbunden ist, und am anderen Ende mit der Lasttrageeinrichtung (4), und dass die Krafteinrichtung durch einen Hydraulikzylinder (12) gebildet ist, der an einem Ende mit dem Rahmen der Treibereinheit (5) verbunden ist und am anderen Ende mit einer mechanischen Kraftübertragungsvorrichtung, wie beispielsweise eine Hubvorrichtung (8), die mit dem Stützrad (3) verbunden ist, so dass die Druckbereiche der jeweiligen Zylinder (6, 12) die Beziehung zwischen einer Lasthebekraft und einer Kraft für ein Entgegenwirken zur Feder bestimmen.

4. Transportwagen nach Anspruch 3, **dadurch gekennzeichnet, dass** das Anordnen eines Beschränkungs- oder eines Abtrennventils zwischen einem Hubzylinder (6) und der einen Hydraulikzylinder (12) bildenden Krafteinrichtung eingerichtet ist, und zwar vorzugsweise nur, um beim Antreiben aktiviert zu werden, d.h. dann, wenn keine Hubbewegung stattfindet, um Oszillationen zwischen einem Stützrad (3) und einer Last entgegenzuwirken.

5. Transportwagen nach einem der vorangehenden Ansprüche **dadurch gekennzeichnet, dass** die Feder (10) auf ihre Vorspannung einstellbar ist.

6. Transportwagen nach einem der vorangehenden Ansprüche, **dadurch gekennzeichnet, dass** die Stützräder (3) so angeschlossen sind, dass eines auf jeder Seite des Antriebsrads (2) ist oder sie an einem Stützradrahmen vereinigt sind, und zwar für eine gemeinsame Bewegung, so dass ein Gleichgewichtseffekt erreicht wird.

## Revendications

1. Chariot muni d'au moins une roue motrice pouvant être dirigée (2), d'au moins une roue de support (3) située à proximité de la roue motrice (2), ladite roue de support (3) étant précontrainte ou pressée contre le sol sous l'action d'un ressort (10), et d'un moyen porteur de charge (4) qui peut être soumis à une force de levage, **caractérisé en ce qu'**un moyen de force (12 ; 6, 13) est agencé pour agir sur la roue de support (3), avec une force antagoniste au ressort (10), la force exercée par le moyen de force (12 ; 6, 13) à l'encontre de la force du ressort (10), ramenée à sa valeur, étant fonction de la force de levage appliquée au moyen porteur de charge (4).

2. Chariot selon la revendication 1, **caractérisé en ce que** le moyen de force est constitué par un vérin de levage (6) à destination du moyen porteur de charge (4), lequel vérin (6), par une première extrémité, est raccordé au moyen porteur de charge (4), et **en ce que** l'autre extrémité est raccordée à un dispositif de transmission de force mécanique, par exemple un dispositif à levier (8), en particulier avec deux bras, qui est également raccordé à la roue de support (3).

3. Chariot selon la revendication 1, **caractérisé en ce que** la force de levage à destination du moyen porteur de charge (4) est fournie par un vérin de levage (6) raccordé, à une première extrémité, au châssis de l'unité d'entraînement (5) et, à l'autre extrémité, audit moyen porteur de charge (4), et **en ce que** le moyen de force est constitué par un vérin hydraulique (12) raccordé, à une première extrémité, au châssis de l'unité d'entraînement (5) et, à l'autre extrémité, à un dispositif de transmission de force mécanique, par exemple un dispositif à levier (8) qui est raccordé à la roue de support (3), de sorte que les aires de pression des vérins respectifs (6, 12) déterminent la relation entre la force de levage de charge et une force antagoniste au ressort.

4. Chariot selon la revendication 3, **caractérisé en ce que** l'agencement d'une vanne d'étranglement ou d'isolement, qui est disposée entre le vérin de levage (6) et le moyen de force, constitue un vérin hydraulique (12), qui est activé seulement, de façon préférable, lors de l'entraînement, c'est-à-dire, lorsqu'aucun mouvement de levage se produit, de façon à contrecarrer les oscillations entre la roue de support (3) et la charge.

5. Chariot selon l'une quelconque des revendications précédentes, **caractérisé en ce que** le ressort (10) peut être ajusté à sa précontrainte.

6. Chariot selon l'une quelconque des revendications précédentes, **caractérisé en ce que** des roues de support (3), une de chaque côté de la roue motrice (2), sont raccordées ou unies sur un châssis de roues support, en vue d'un mouvement commun, de sorte qu'un effet d'équilibrage est obtenu.
